# EUROPEAN PATENT APPLICATION

(11) **EP 3 026 769 A1**
(43) Date of publication of application: **01.06.2016**
(21) Application number: 14194697.0
(22) Date of filing: 25.11.2014
(51) Int. Cl.: H02G 15/14

(54) **Cable penetrator system for subsea equipment**

(71) Applicant: Siemens Aktiengesellschaft, 80333 München (DE)
(72) Inventor: Knight, Neil, Barrow-in-Furness, LA14 5DS (GB)

(57) **Abstract**

A cable penetrator system (40) for subsea equipment (10) is provided. The cable penetrator system (40) comprises a first housing part (41) including a first opening (43) for receiving a first sealing penetrator (15) and a second housing part (45) including a second opening (47) for receiving a second sealing penetrator (17). The second housing part (45) is movable relative to the first housing part (41) from a first position to a second position. In the second position, the second housing part (45) is in a locked position relative to the first housing part (41) and a distance between the first opening (43) and the second opening (47) is larger than in the first position.

## Description

The present invention relates to a cable penetrator system for subsea equipment and a method for establishing a cable penetrator for subsea equipment.

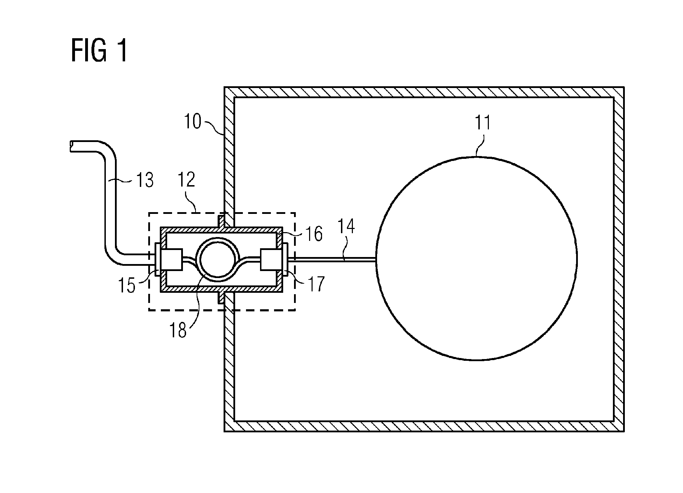

Subsea electrical equipment is housed in modules which use pressure retaining electrical penetrators and connectors to take the power from a subsea environment to the electrical equipment within the module. The modules may comprise of a pressure balanced environment, oil for example or one atmosphere pressure environment, nitrogen for example to protect equipment from extreme high pressure in deep water. The high pressure difference between an inside and an outside of the module may require a dual penetrator or connector system in order to safeguard against a seal failure. Fig. 1 shows an exemplary electrical subsea equipment 10 protecting electrical equipment 11 from seawater at an outside of the enclosure of the subsea equipment 10. A dual penetrator or connector system 12 enables the coupling of a harness or hose 13 at an outside of the subsea equipment 10 to an internal cable connection 14. A first penetrator or connector 15 is sealed to a termination chamber 16 at a seawater side of the penetrator or connector system and a second penetrator or connector 17 is sealed to an interior side of the termination chamber 16. The termination chamber 16 itself is sealed to an enclosure of the subsea equipment 10. If there is a breach of the first penetrator or connector seal 15, the second penetrator or connector seal 17 will provide the barrier between seawater and the interior of the subsea equipment 10. The termination chamber 16 has to be large enough to accommodate both penetrators or connectors 15, 17 and a connection cable 18 that is required to perform the connection of one penetrator or connector to the other. The size of the termination chamber 16 and the cable management of the connections between the penetrators and connectors 15, 17 offer challenges as space within the subsea modules is often limited. Cable management of connection cables 18 between the penetrators and connectors 15, 17 is critical to the electrical performance of the system regarding partial discharge, as this can arise if the connection cables 18 come into direct contact with the metal of the termination chamber 16.

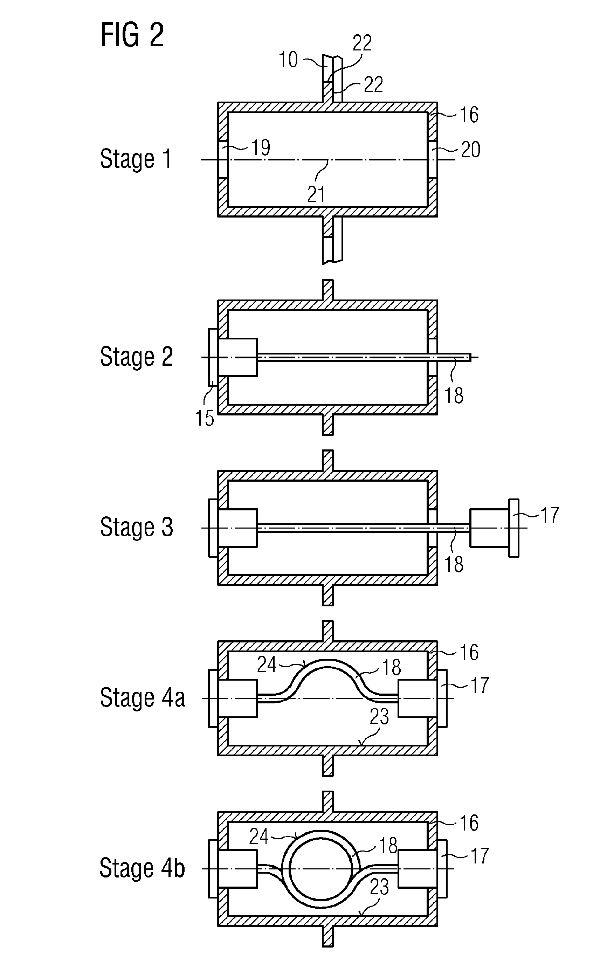

As will be explained in the following in connection with Fig. 2, the connection cable 18 is overlength to enable the termination of the second penetrator or connector 17 to be performed outside the termination chamber 16. Fig. 2 shows the assembly of a dual penetrator or connector system at a housing of a subsea equipment in several assembly stages. In stage 1, the dual penetrator or connector termination chamber 16 is welded or sealed and bolted into the enclosure of the subsea equipment 10 at surfaces 22. The termination chamber 16 provides a first opening 19 and a second opening 20 for receiving the penetrators or connectors 15 and 17. The openings 19 and 20 may be aligned along a longitudinal axis 21. The openings 19 and 20 as well as the termination chamber 16 may have a circular cross-section. However, other cross-sections may be used. In stage 2, the first penetrator or connector 15 is terminated to the connection cable 18 and to the first opening 19. Thus, a sealed connector or a sealed penetrator for the connection cable 18 is provided at the seawater side of the cable penetrator system 12. The seawater side is also called wet side. In stage 3, the second penetrator or connector 17 is terminated to the connection cable 18. An overlength of the connection cable 18 is required to achieve this. In stage 4, the second penetrator or connector 17 is secured to the second opening 20 of the termination chamber 16. The overlength of the connection cable 18 is accommodated within the termination chamber 16, either as a bent cable as shown in stage 4a or as a loop as shown in stage 4b. However, a contact between an outside surface 24 of the connection cable 18 and in inside surface 23 of the termination chamber 16 has to be avoided to prevent electrical issues such as partial discharge. Furthermore, a minimum bend radius of the connection cable 18 has to be considered.

As can be seen from the description above, the overlength of the connection cable 18 may require a large size of the termination chamber 16 to avoid critical electrical issues, for example partial discharges, as this can arise if the connection cable 18 comes into direct contact with the metal of the termination chamber 16.

Therefore, there is a need to provide a cable penetrator or connector system for subsea equipment which avoids reliably a contact of a connection cable within the termination chamber and which has a compact design.

### Summary of the invention

According to the present invention, this object is achieved by a cable penetrator system for subsea equipment as defined in claim 1 and a method for establishing a cable penetrator for subsea equipment as defined in claim 8. The dependent claims define preferred and advantageous embodiments of the present invention.

According to an embodiment, a cable penetrator system for subsea equipment is provided. The cable penetrator system comprises a first housing part including a first opening for receiving a first sealing penetrator and a second housing part including a second opening for receiving a second sealing penetrator. The second housing part is movable relative to the first housing part from a first position to a second position. In the second position, the second housing part is in a locked position relative to the first housing part. Furthermore, in the second position a distance between the first opening and the second opening is larger than in the first position. In other words, the distance or length between the first opening and the second opening may be varied such that an overlength between the first sealing penetrator and the second sealing penetrator may be compensated. Therefore, the cable penetrator system may provide a compact housing as a space inside the housing for accommodating overlength of a connection cable may be avoided. The first sealing penetrator and the second sealing penetrator may comprise for example a penetrator terminated to a subsea cable to be introduced into the subsea equipment or a connector providing a detachable connection to a subsea cable or to electrical equipment inside the subsea equipment.

According to an embodiment, the first opening and the second opening are arranged along a common axis and the second housing part is movable relative to the first housing part along the direction of the common axis. When the first and second openings are arranged along the same axis along which the housing parts are movable, the distance between the first and second opening is varying linearly with the movement of the housing parts and therefore an overlength of the connection cable may be easily compensated without bending the connection cable. Furthermore, a contact between the connection cable and an inner surface of the housing part may be reliably avoided.

According to an embodiment, the first housing part provides a cylindrical opening for receiving the second housing part and the second housing part has an outer surface of a cylindrical shape matching to the cylindrical opening in the first housing part. In other words, the second housing part has an outer shape which is complementary to an inner shape of the first housing part and therefore the second housing part is insertable into the first housing part. Furthermore, the second housing part is at least partially inserted into the cylindrical opening of the first housing part in the first and second positions. For example, the second housing part is slidably inserted in the cylindrical opening of the first housing part like a piston in a cylinder. Therefore, the second housing part can be easily moved with respect to the first housing part and the distance between the first opening and the second opening may be adjusted.

According to another embodiment, the cable penetrator system comprises a sealing arrangement which provides a sealing between the second housing part and the first housing part in at least the second position. In the second position, when the second housing part is protruding from the first housing part and is arranged in its locked position, the sealing arrangement may provide a sealing such that the first housing part and the second housing part form a sealed termination chamber of the cable penetrator system. When the first sealing penetrator is sealed at the first opening and the second sealing penetrator is sealed at the second opening, a double sealing is provided such that in case of a single sealing failure of one of the first sealing penetrator, the second sealing penetrator and the sealing arrangement, still at least one barrier is provided for prohibiting seawater from intruding into the subsea equipment.

According to yet another embodiment, the cable penetrator system further comprises a fixing arrangement for connecting the second housing part and the first housing part in the second position. The fixing arrangement may comprise a flange and screws to reliably keep the second housing part in the second position.

According to another embodiment, at least one of the first housing part and the second housing part comprises a mounting arrangement for mounting the at least one of the first housing part and the second housing part on an opening in a housing of the subsea equipment. The mounting arrangement may comprise for example a seal and a thread for sealingly coupling the first housing part or the second housing part to the opening in the housing of the subsea equipment.

According to another embodiment, a method for establishing a cable penetrator for subsea equipment using the above-described cable penetrator system is provided. According to the method, the first housing part is mounted on an opening in a housing of the subsea equipment. The first sealing penetrator is coupled to a connection cable. The connection cable may be intended to provide an electrical connection from an outside of the subsea equipment to an inside of the subsea equipment. The first sealing penetrator is received in the first opening of the cable penetrator system, for example by inserting the first sealing penetrator in the first opening such that the connection cable is at least partially extending through the opening into the housing of the subsea equipment. Next, the second housing part is arranged in the first position at the first housing part. For example, the second housing part is inserted in the cylindrical opening of the first housing part. The second sealing penetrator is coupled to the connection cable at a predefined distance from the first sealing penetrator in an inside of the subsea equipment. The second housing part is moved in the second position thus enlarging the distance between the first opening and the second opening such that the second sealing penetrator is received in the second opening without the connection cable being bent between the first and second sealing penetrators. Finally, the first sealing penetrator and the second sealing penetrator may be sealed and fixed at the corresponding first and second openings.

Although specific features described in the above summary and in the following detailed description are described in connection with specific embodiments and aspects of the present invention, it should be understood that the features of the exemplary embodiments and aspects may be combined with each other unless specifically noted otherwise.

### Brief description of the drawings

The present invention will now be described in more detail with reference to the accompanying drawings.
Fig. 1 shows schematically a typical dual penetrator or connector installation.
Fig. 2 shows schematically a typical dual penetrator or connector system.
Fig. 3 shows method steps for establishing a cable penetrator for a subsea equipment using a cable penetrator system according to an embodiment of the present invention.
Fig. 4 shows schematically a cable penetrator system for subsea equipment according to an embodiment of the present invention.
Fig. 5 shows schematically a compact dual penetrator/connector according to another embodiment of the present invention.

### Detailed description of preferred embodiments

In the following, exemplary embodiments of the invention will be described in more detail. It is to be understood that the features of the various exemplary embodiments described herein may be combined with each other unless specifically noted otherwise. Some reference signs in the various drawings relate to similar or identical components.

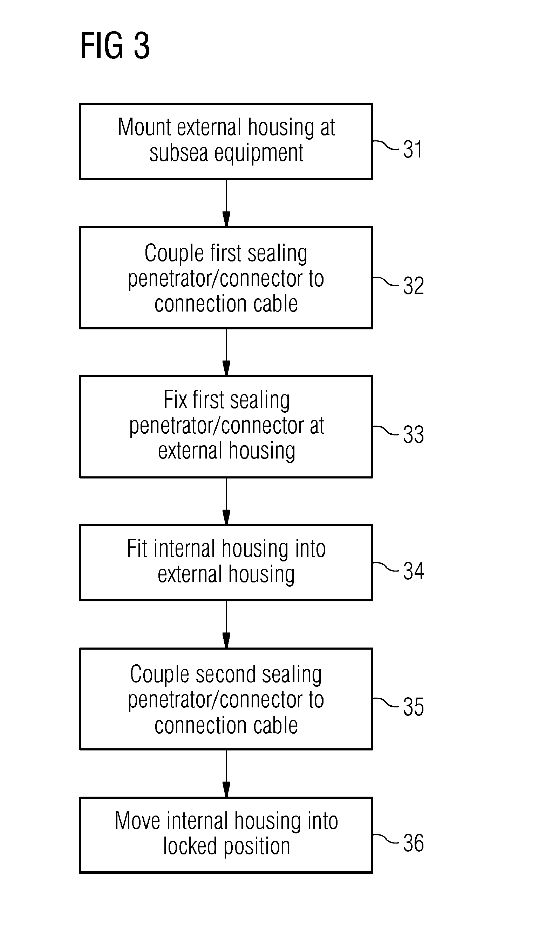

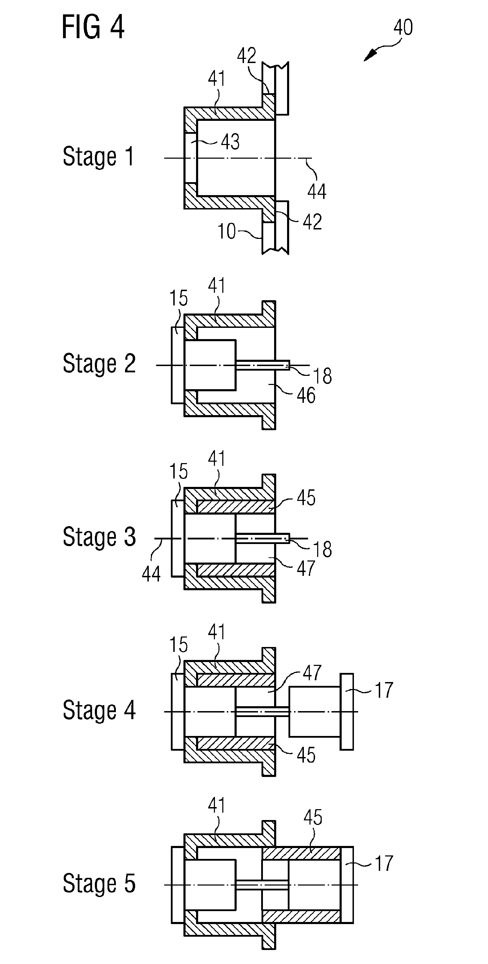

In the following, establishing a cable penetrator for subsea equipment will be described in more detail in connection with Fig. 3 and 4. Figure 3 shows method steps for mounting a cable penetrator system 40 shown in Fig. 4 at a housing wall of a subsea equipment 10. The subsea equipment 10 may comprise for example a module as described above in connection with Fig. 1. Fig. 3 shows method steps 31-36 for establishing the cable penetrator and Fig. 4 shows in a schematic view of the cable penetrator system 40 in different assembly stages during establishment of the cable penetrator.

In step 31, a first housing part 41, which will be also called external housing part, is mounted on an opening in a housing of the subsea equipment 10. The first housing part 41 is mounted such that it is in contact with seawater when the subsea equipment is immersed subsea. A mounting arrangement 42 may be provided at the first housing part 42, which engages with a complementary mounting arrangement in the housing of the subsea equipment 10. For example, the mounting arrangement 42 may comprise a bolted flange with metallic or elastomeric seals or welded. The first housing part 41 provides a first opening 43 for receiving a first sealing penetrator 15. The first housing part 41 mounted on the opening of the housing of the subsea equipment 10 is shown in assembly stage 1 of Fig. 4.

In step 32, the first sealing penetrator 15 or a first sealing connector is coupled to a connection cable 18, and the first sealing penetrator/connector terminated to the connection cable 18 is fixed at the first housing part 41 (step 33) as shown in assembly stage 2 of Fig. 4. The first housing part 41 provides a cylindrical opening 46 for receiving a second housing part 45. An outer diameter of the first housing part may be in a range of 15-250 mm. In step 34, the second housing part 45, which is also called internal housing, is fit into the cylindrical opening 46 of the first housing part 41. The second housing part 45 provides a second opening 47 for receiving a second sealing penetrator 17 or a second sealing connector at an inside of the subsea equipment 10. However, as shown in assembly stage 3 of Fig. 4, initially the second housing part 45 is moved as far as possible into the cylindrical opening 46 of the first housing part 41 such that a distance between the first opening 43 of the first housing part 41 and the second opening 47 of the second housing part 45 becomes a minimum. This will be called the first position of the second housing part 45. Preferably, as shown in Fig. 4, the first opening 43 and the second opening 47 are configured such that they are aligned along a common longitudinal axis 44. Furthermore, as shown in Fig. 4, the second housing part 45 is movable in the direction of the longitudinal axis 44 with respect to the first housing part 41. In step 35, the second sealing penetrator 17 or the second sealing connector is coupled to the connection cable 18 as shown in assembly stage 4 in Fig. 4. As can be seen in Fig. 4, the connection cable 18 is extending beyond the second opening 47 of the second housing part 45 such that the second sealing penetrator 17 can be easily coupled to the other end of the connection cable 18. In step 36, the internal second housing part 45 is moved along the common axis 44 such that it is extending from the cylindrical opening 46 of the first housing part 41 and the distance between the first opening 43 in the first housing part 41 and the second opening 47 in the second housing part 45 becomes larger until the second opening 47 engages with the second sealing penetrator 17. This is called the second position of the second housing part 45 and is shown in assembly stage 5 of Fig. 4. In the second position of the second housing part 45, the second housing part 45 may be locked with respect to the first housing part 41. Furthermore, a sealing between the first housing part 41 and the second housing part 45 may be provided by metallic or elastomeric seals or welding the housing parts 41 and 45. As can be seen from Fig. 4, in the cable penetrator system 40 the connection cable 18 remains in a straight line along the common axis 44 and a cable management or a cable bending as shown in assembly stages 4a and 4b of Fig. 2 can be avoided.

As can be seen from the above, the cable penetrator system 40 removes the need for an overlength of the connection cable 18 in order to perform the electrical connection in a dual penetrator or dual connector system. This in turn reduces the size of the termination chamber formed by the first and second housing parts 41 and 45 and the need to accommodate an overlength of the connection cable 18.

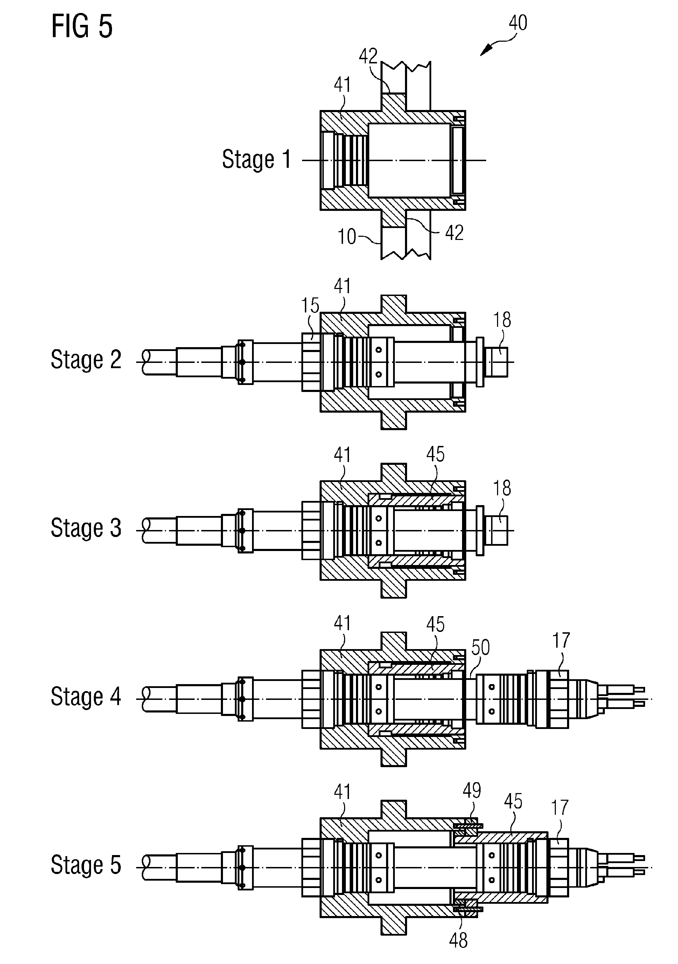

Fig. 5 shows a further cable penetrator system 40 at five assembly stages which are comparable to the assembly stages shown in Fig. 4. In assembly stage 1, a first housing part 41 is welded to a subsea module or sealed and bolted to a subsea module, for example to a subsea equipment 10 as shown in Fig. 1. In assembly stage 2, a first penetrator or connector 15 is welded or sealed and secured into the first housing part 41. A predetermined connection cable 18 is preterminated to the first penetrator or connector 15 and inserted through the first housing part 41. In assembly stage 3, a second or internal housing part 45 slides into the first or external housing part 41. The connection cable 18 is exposed to allow termination of a second penetrator or connector. In assembly stage 4, a second penetrator or connector 17 is terminated to the connection cable 18. The connection cable 18 may comprise a plurality of cables. The connection cable 18 may comprise furthermore a gel filled elastomer 50 to isolate the connection cable from the internal and external housing parts 41 and 45. In assembly stage 5, the second housing part 45 is moved from its fist position of assembly stage 4 to its second position of assembly stage 5 and the second penetrator or connector 17 is welded or sealed and secured into the second housing part 45. Furthermore, the second housing part 45 may be sealed by a seal 48 to the first housing part 41 and may be secured by means of a screwed flange 49 to the first housing part 41. The seal 48 may comprise a polymer or elastomer or metallic seal.

To sum up, the above-described dual penetrator/connector system consists of two penetrator/connector housing parts, one of which slides inside the other to enable the termination of the connection cable to be performed before being sealed and secured or welded to form a compact termination chamber. The penetrator/connector external housing is secured to the subsea module by way of welding or bolting. The subsea module may comprise for example a motor, a transformer, an uninter-ruptible power supply, a variable speed drive and so on and may be housed in a pressure compensated subsea enclosure. When bolted metallic or elastomeric seals may be employed. The penetrator or connector is terminated to the connection cable or the connection cables of a predetermined length and then sealed and secured or welded to the external penetrator or connector housing. An internal penetrator or connector housing slides inside the external penetrator or connector housing. This gives sufficient space to perform the termination of the second penetrator or connector to the connection cables from the first penetrator or connector. Once the connection cables are terminated, the internal penetrator or connector housing is slid into place and is sealed and secured or welded to the external penetrator or connector housing to form a compact termination chamber. The second penetrator or connector is sealed and secured or welded into the internal penetrator or connector housing.

## Claims

1. A cable penetrator system for subsea equipment, comprising:
- a first housing part (41) including a first opening (43) for receiving a first sealing penetrator (15), and
- a second housing part (45) including a second opening (47) for receiving a second sealing penetrator (17),
wherein the second housing part (45) is moveable relative to the first housing part (41) from a first position to a second position, wherein in the second position the second housing part (45) is in a locked position relative to the first housing part (41) and a distance between the first opening (43) and the second opening (47) is larger than in the first position.

2. The cable penetrator system according to claim 1, wherein the first opening (43) and the second opening (47) are arranged along a common axis (44), wherein the second housing part (45) is moveable relative to the first housing part (41) along a direction of the common axis (44).

3. The cable penetrator system according to claim 1 or 2, wherein the first housing part (41) provides furthermore a cylindrical opening (46) for receiving the second housing part (45), wherein the second housing part (45) provides an outer surface having a cylindrical shape matching to the cylindrical opening (46) of the first housing part (41), wherein the second housing part (45) is at least partially inserted into the cylindrical opening (46) of the first housing part (41) in the first and second positions.

4. The cable penetrator system according any one of the preceding claims, further comprising a sealing arrangement (48) for providing a sealing between the second housing part (45) and the first housing part (41) in at least the second position.

5. The cable penetrator system according any one of the preceding claims, further comprising a fixing arrangement (49) for connecting the second housing part (45) and the first housing part (41) in the second position.

6. The cable penetrator system according any one of the preceding claims, wherein at least one of the first housing part (41) and second housing part (45) comprises a mounting arrangement (42) for mounting the least one of the first housing part (41) and second housing part (45) on an opening in a housing of the subsea equipment (10).

7. The cable penetrator system according any one of the preceding claims, wherein the first sealing penetrator (15) and/or the second sealing penetrator (17) comprises at least of a group comprising:
- a penetrator terminated to a subsea cable (13) to be introduced into the subsea equipment (10), and
- a connector providing a detachable connection to a subsea cable (13).

8. A method for establishing a cable penetrator for subsea equipment using a cable penetrator system (40) according to any one of the preceding claims, the method comprising the steps of:
- mounting the first housing part (41) on an opening in a wall of the subsea equipment (10),
- coupling the first sealing penetrator (15) to a connection cable (18),
- receiving the first sealing penetrator (15) in the first opening (43),
- arranging the second housing part (45) in the first position,
- coupling the second sealing penetrator (17) to the connection cable (18) at a predefined distance from the first sealing penetrator (15), and
- moving the second housing part (45) in the second position thus receiving the second sealing penetrator (17) in the second opening (47).
